# EUROPEAN PATENT SPECIFICATION

(11) **EP 2 936 585 B1**
(45) Date of publication and mention of the grant of the patent: **12.07.2017**
(21) Application number: 13824534.5
(22) Date of filing: 16.12.2013
(51) Int. Cl.: H01M 2/12, H01M 10/52, H01M 10/06, H01M 10/12

(54) **GAS RECOMBINATION CAP**
GASREKOMBINATIONSKAPPE
COIFFE DE RECOMBINAISON DE GAZ

(30) Priority: 20.12.2012 PL 40214912; 23.07.2013 PL 40482713
(43) Date of publication of application: 28.10.2015
(73) Proprietor: Bater Sp. z o.o., 01-376 Warszawa (PL)
(72) Inventor: MOSZCZYNSKI, Piotr, 05-230 Blonie (PL); PIÓRO, Grzegorz, 05-230 Kobylka (PL)
(74) Representative: Gizinska-Schohe, Malgorzata
(86) International application number: PCT/PL2013/000165
(87) International publication number: WO 2014/098631

(56) References cited:
- EP-A1- 0 161 398
- EP-A1- 1 674 424
- EP-A1- 1 780 826

## Description

The present invention refers to a gas recombination cap used to reduce gas emissions and water losses during the operation of a battery, and especially an acid lead battery.

During the operation of an acid lead battery, in the process of electrolysis a water/electrolyte solution decomposes into hydrogen and oxygen. These gases can create an explosive mixture in the air. Additionally, electrolysis process leads to reduction of water content in an electrolyte which must be relatively often replenished in a battery. Transformation of hydrogen and oxygen into steam is an exothermic process. Heat generated in the recombination process inside an enclosed battery leads to significant increase in the degradation rate of lead electrodes immersed in an electrolyte. Therefore, it is favorable to make the recombination process occur at a distance from electrodes by using catalytic devices where oxygen and hydrogen are recombined into water, thanks to which the useful life of the whole battery increases.

There is known from the Polish patent PL 202003 a device for the recombination of water from oxygen and hydrogen released while charging chemical power sources, which comprises a gas-tight housing having a recombination unit and a hole inside. This gas-tight housing is provided with a tube through which water can return to the battery. The outlet of the water return tube is immersed in battery electrolyte. A recombination unit has the form of a pipe, with a pipe end located directly in the gaseous space of a battery. The pipe of the recombination unit is made of any material, and is filled inside with a known catalytic bed and a known bed having absorption properties.

From the Polish patent PL 207508 there is also known a recombination unit for catalytic recombination of hydrogen present in energy containers or energy converters, having a gas-tight housing and a catalyst located inside. The recombination unit has a negative pressure valve providing a hydraulic and pneumatic connection between an internal chamber of the gas-tight housing and the surrounding environment, and a positive pressure valve providing a connection between the internal chamber of the gas-tight housing with the environment. The positive pressure valve and/or negative pressure valve is connected hydraulically and pneumatically to the environment through an ignition shield only. In the working position of the recombination unit, the positive pressure valve and the negative pressure valve can be put on the top of the gas-tight housing or on the top and on the side of the gas-tight housing. The positive pressure valve and/or the negative pressure valve has a condensate removal conduit. There is a section of the housing directed upwards in the form of a rib which diverges from the section of the gas-tight housing on the top in the recombination unit's working position, and this section defines the empty space where the positive pressure and the negative pressure valve are located. The actual ignition shield is provided in the form of a frit.

From the European patent application EP 1780826 A1 there is known a gas recombination cap with a gas-tight housing provided with a recombination unit inside thereof comprising a catalyst and an absorbent.

The purpose of this invention was to develop a gas recombination cap controlled by the valve for external recombination of gases in batteries, and specifically in acid lead batteries. In particular, the objects are achieved by a gas recombination cap according to claim 1. Preferred embodiments are subject of dependent claims.

A gas recombination cap with a gas-tight housing provided in the inside with a recombination unit with a catalyst and an adsorbent, a positive pressure valve, a negative pressure valve and an ignition safety device according to the invention comprises a gas-tight housing having the form of a basket with openings, a body, a condensation cylinder and a top cap.

A basket with its openings makes it possible for the condensate flowing down the cap walls to return to the battery.

A body has a conical shape, is located on the basket and has a flange inside. The flange is mounted on the body through a pin with a head pressed into a mounting hole in the body and a mounting hole in the flange, and through distance ribs on the flange which fit into respective grooves of the body.

A condensation cylinder is located on the body, has a shape of a tube narrowing to the top into the form of a conical neck, which on the outside has a crosswise spherical rib reinforced with vertical ribs, and on the inside is provided with cross-wise shelves with wedges, and which narrows down upwards through beveling and ends with a throat. The condensation cylinder is mounted on the body through some notches on the circumference of the bottom part of the condensation cylinder and respective protruding ribs on the circumference of the body. The inside of the condensation cylinder is provided with a catalytic core, a drip cap, a two-way valve, an ignition safety device.

A catalytic core has the shape of a ceramic tube filled in with a catalyst, favorably in the form of globules with a relevant active surface, and adsorbent. The ceramic tube of the catalytic core is mounted inside the sleeve of the flange inside the body, wherein the diameter of the catalytic core and the diameter of the sleeve in the flange in the body are similar.

A drip cap is placed over the catalytic core and has the shape of a cover which is convex on the outer side and concave on the inner side. The drip cap is provided with some elements anchored on the wedges of the condensation cylinder and with a protruding bowknot element above the crosswise shelves of the condensation cylinder. On the outer side the drip cap is provided with distance elements which ensure a proper distance of the walls of the condensation cylinder and the catalytic core from the drip cap, and on the inner side with an installation opening for central insertion of the drip cap into the hole of the condensation cylinder.

A two-way valve is located over the drip cap and is a modular combination of one-way valves: a positive pressure valve and a negative pressure valve placed in an housing with inlet openings enabling gas transport. There is a groove on the housing of the two-way valve, where a gasket is placed, favorably an o-ring, of an adapted inner and outer diameter, which seals the mounting of the two-way valve in the condensation cylinder. Favorably, the positive pressure valve and the negative pressure valve have an umbrella design. The positive pressure valve opens at a pressure of 120 mbar - 190 mbar, whereas the negative pressure valve opens at 50 mbar - 100 mbar.

An ignition safety device made of porous ceramic material is mounted between the top cap and the two-way valve, in the throat of the upper part of the condensation cylinder, ensuring tightness so that gases can only go through the pores of the ignition safety device.

A top cap is provided with inlet and outlet openings, clamps for the connection with the condensation cylinder and crosswise distance ribs. The top cap is permanently coupled with the condensation cylinder as the clamps are pressed into the crosswise rib of the condensation cylinder. The top cap is mounted on the condensation cylinder in such a way that it can be turned freely on the circumference of the rib of the condensation cylinder, which ensures safe gas circulation. The crosswise distance ribs of the top cap adhere to the ignition safety device, pressing it in the throat of the upper part of the condensation cylinder, and they form a free space between the inner surface of the top cap and the top surface of the condensation cylinder, ensuring safe gas circulation.

In a favorable embodiment, the basket and the flange are a monolithic element placed inside the body. The basket and the flange are coupled with the body in one integrated whole thanks to connectors located symmetrically over the circumference and having the form of elongated distance ribs. On the inside, the flange is provided with elongated distance ribs placed symmetrically on its circumference, which make it possible to mount the catalytic core in the flange at a relevant depth and which extract excess heat. The connectors coupling the flange and the basket with the body, and the distance ribs inside the flange, are aligned with respect to each other. The flange, at its base, is provided with inlet and outlet gaps placed symmetrically over the circumference of the side wall, said gaps having the purpose of gas transport and enabling the return of condensate flowing down the cap walls to the battery. Favorably, the inlet and outlet gaps have a rectangular shape with a narrowing in the middle part. The upper wall of the body inclines inwards the body to facilitate the flow down of condensate and prevent accumulation of condensate on the o-ring. On the outer side, the body is provided with a cross-wise rib, which from the bottom hides the mounting elements of the condensation cylinder.

The design of the gas recombination cap in this embodiment eliminates a possibility that the flange will tilt to one side in the body during the operation of the cap, specifically at higher temperatures. This result has been achieved through the coupling of the flange, basket and body in one integrated whole, thanks to which the flange and the basket are mounted in the body of the cap according to the invention in a stable and safe way. Position of the inlet and outlet gaps close to the base of the flange, the shape of the gaps and the narrowing in the middle between the gaps facilitates gas transport and condensate flow down. Inclination of the upper wall of the body towards the inside facilitates condensate flow-down, and prevents accumulation of condensate on the o-ring. A profiled crosswise rib on the body ensures regular pressure of the gasket and hides the mounting elements of the condensation cylinder and the body from the bottom.

In a favorable embodiment, in order to increase fatigue stress resistance of the cylinder at the point of mounting thereof with the body, right angles in the notches in the bottom part of the cylinder were eliminated, and the curve radius was adapted respectively for every incision width. A narrower notch has a proportionately bigger curve, thanks to which a curve is formed to connect inside walls of the notch. Wide notches at the point of contact with inside walls have much smaller curves. Use of different-radius curves depending on the notch width reduces a possibility of fatigue stress occurrence and increases the structural strength of the mounting of the cylinder on the body. The cylinder with aforesaid favorable curves of the notches in the gas recombination cap according to the invention can withstand much bigger tensile forces without propagation of cracks starting on the sharp inside edges, which could act as a notch for the initiation of the cracking process resulting from tensile stresses. Such a shape of the notches makes it possible to use body gaskets having different thicknesses without a risk of mechanical damage to the cylinder.

The design of the gas recombination cap according to the invention ensures minimum emission of gases to the atmosphere and is safe for the surrounding environment. In the design of the cap according to the invention, gases released in the process of electrolysis of water from the electrolyte transform into steam in a controlled way once they get to the cap. Steam then condenses on the walls of the gas recombination cap, and after cooling flows down back to the battery as water. In order to realize the most efficient gas recombination process, in the design of the cap according to the invention, a two-way pressure adjustment system was used in addition to the special catalyst, said adjustment system securing the entire system against mechanical damage due to uncontrolled pressure surge or drop. Positive and negative pressure valves adjust pressure inside the device on their own until the most favorable value is obtained. In order to ensure safe operation, a ceramic hydrogen ignition safety device was installed over the two-way valve adjusting pressure in the cap. The cap according to the invention with a system of the positive and negative pressure valves, when operated properly, reduces maintenance requirement, that is reduces a necessity to replenish electrolyte level in a battery. The design of the cap according to the invention improves the safety of battery use in places of limited ventilation while maintaining gas recombination capacity as high as possible.

The object of the present invention is shown in embodiments in the attached drawing, where fig. 1.1 shows an outside view of a gas recombination cap, fig. 1.2 - shows a view of a gas recombination cap with partially shown inside structure, fig. 2.1 - shows a front view of a condensation cylinder, fig. 2.2 - shows a longitudinal section of a condensation cylinder, fig. 2.3 - shows a top view of a condensation cylinder, fig. 2.4 - shows a bottom view of a condensation cylinder, fig. 3.1 - shows a top view of a drip cap, fig. 3.2 - shows a longitudinal section of a drip cap, fig. 3.3 - shows a front view of a drip cap, fig. 3.4 - shows a bottom view of a drip cap, fig. 3.5 - shows a perspective view of a drip cap, fig. 4.1 - shows a front view of a two-way valve, fig. 4.2 - shows a longitudinal section of a two-way valve, fig. 4.3 - shows a perspective view of a two-way valve, fig. 4.4 - shows a top view of a two-way valve, fig. 5.1 - shows a bottom view of a top cap, fig. 5.2 - shows a top view of a top cap, fig. 5.3 - shows a perspective view of a top cap, fig. 5.4 - shows a longitudinal view of a top cap, fig.6.1 - shows a view of a body flange, fig. 6.2 - shows a cross-section of a body flange, fig. 6.3 - shows a body flange with a catalytic core, fig. 7.1 - shows a view of pine with a head for mounting the flange in the body, fig. 7.2 - shows a front view of a body, fig. 7.3 - shows a top view of a body, fig. 7.4. - shows a longitudinal section of a body flange with a catalytic core, fig. 7.5. - shows a perspective view of a body with a catalytic core. Further figures of the drawing represent a favorable embodiment of the cap according to the invention, where fig. 8.1 shows a top view of a gas recombination cap, fig. 8.2 - shows a view of a gas recombination cap with partially uncovered internal structure, fig. 9.1 - shows a top perspective view of a cap body, fig. 9.2 - shows a top perspective view of a cap body with a catalytic core, fig. 10.1- shows a longitudinal section of a cap body with a catalytic core, fig. 10.2 - shows a top view of a cap body with a catalytic core, fig. 11.1 shows a side view of a cap cylinder with curved notches, fig. 11.2 shows an axial section of the cap cylinder with curved notches, and fig. 11.3 shows an enlarged top view of the bottom part of a cylinder with notches.

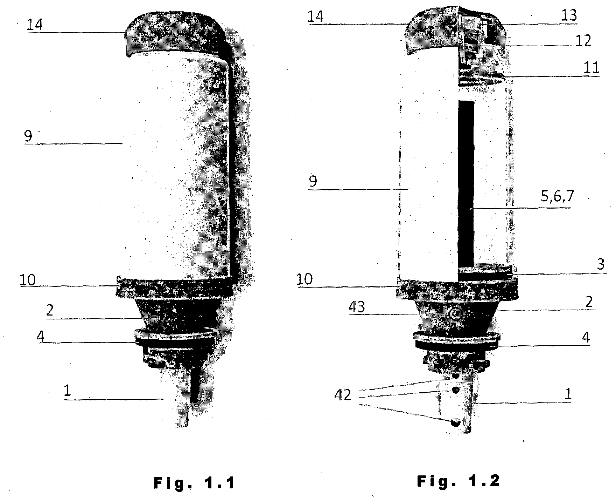

The gas recombination cap shown in fig. 1.1 and fig. 1.2 comprises a basket 1 with openings 42, a body 2, a gasket 3 of a body 2, a ring 10, a condensation cylinder 9, a top cap 14, a gasket 4 for mounting the cap to the battery's cover, a catalytic core 5 with a catalyst 6 and an adsorbent 7, a drip cap 11, a two-way valve 12, an ignition safety device 13. The entire structure of the cap forms a tight system which is installed on battery covers.

The basket 1 and its openings 42 make it possible for the condensate flowing down the walls of the cap 1 to return to the battery, wherein location of the basket 1 inside the cap makes the condensate drip from a much lower height, thanks to which the solution according to the invention reduces an electrolyte splash effect and eliminates washing of the active mass from the electrodes located directly under the recombination gap.

Sintered ceramic material is used as a catalytic core 5 in the cap according to the invention, and is characterized by very high resistance to thermal shocks while having a significantly porous structure. This material can operate at temperatures much above 600°C. The catalytic core 5 is characterized by very high mechanical strength, durability, and when heated up to a high temperature does not deform in contact with condensate having a room temperature. A properly selected diameter of the catalytic core 5, a diameter of a sleeve 49 of a flange 8 and a depth of the sleeve 49 of the flange 8 ensure its stable positioning by mechanical pressing of the tube of the catalytic core 5 into the sleeve 49 of the flange 8. Inside the catalytic core 5 there is a spheroid catalyst 6 of platinum family. Catalyst carrier 6 used in the solution according to the invention is characterized by high chemical, thermal and mechanical resistance. An adsorbent 7 having a spherical structure with pore size at a molecule level, characterized by chemical resistance and resistance to high temperature is used as a filler in the catalytic core 5. In the cap according to the invention it is possible to mount a catalytic core 5 of different heights. Height, and consequently quantity of a catalyst inside, can be used for adjustment of efficiency and recombination potential depending on battery capacity and battery charging voltage from 2.2 V to 2.7 V. The cap according to the invention can work at voltages higher than water decomposition voltage where significant quantity of hydrogen is decomposed.

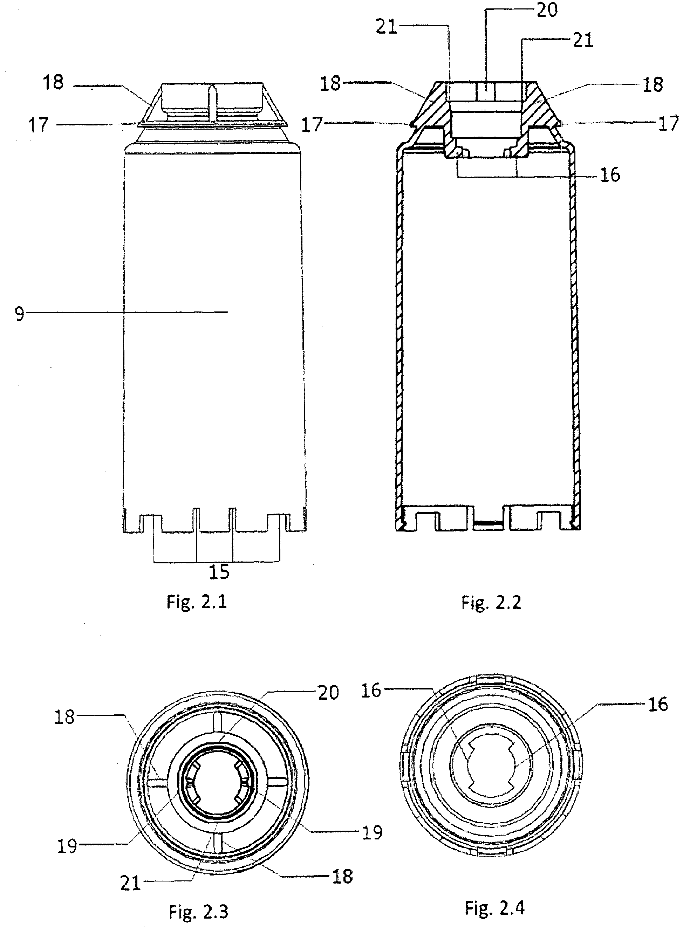

The condensation cylinder 9 shown in fig. 2.1, fig. 2.2, fig. 2.3 and fig. 2.4 has a tubular shape and is made of plastic characterized by high thermal resistance. The condensation cylinder 9 ends with rectangular notches 15 over the circumference of the bottom part, which serve its tight mounting on the body 2 in the protruding ribs 47 fitting into the notches 15. The condensation cylinder 9 narrows down at the top into a conical neck, which on the outside comprises a crosswise rib 17 having a circular shape, which is used to keep a top cap 14 in position after closing the clamps 35. The rib 17 is reinforced with vertical ribs 18 which strengthen the structure of the condensation cylinder 9 at high temperatures. From the inside, the neck of the condensation cylinder 9 is provided in its bottom part with crosswise shelves 16 with wedges 19 for installation of a drip cap 11 and narrows down to the top with beveling 21, thanks to which an o-ring gasket 32 is not cut on the housing 31 while installing a two-way valve 12. A neck of the condensation cylinder 9 ends with a throat 20 which enables accurate and tight positioning of an ignition safety device 13 which guarantees that gases permeate only through the pores of the ignition safety device 13.

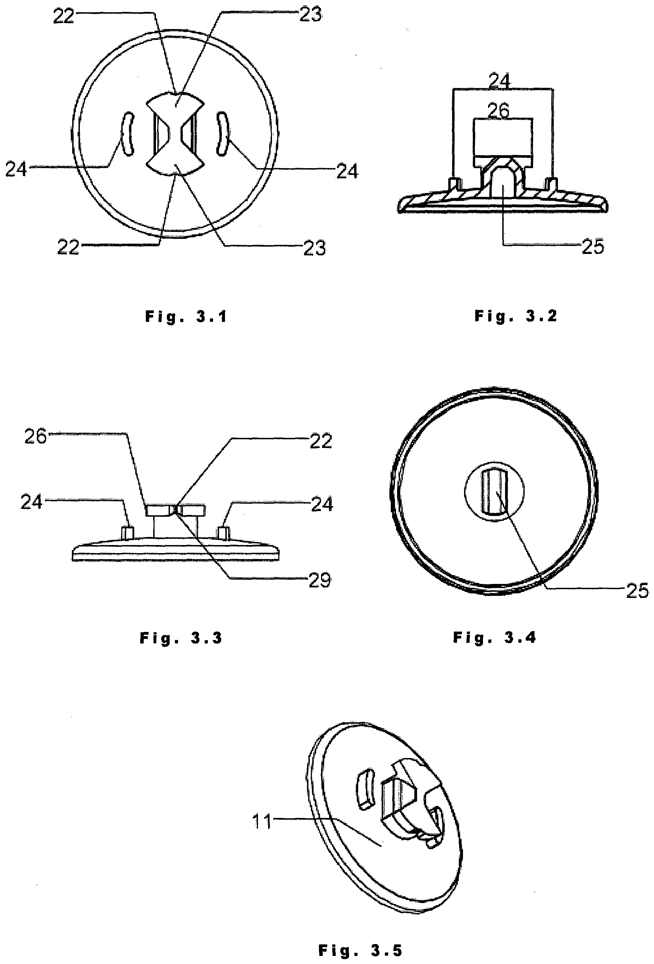

The drip cap 11 shown in fig. 3.1, fig. 3.2, fig. 3.3, fig. 3.4 and fig. 3.5 is located over the catalytic core 5, has the shape of a cover convex on the outside and concave on the inside and on its outer side is provided with elements 22, 26, 29 for anchoring the drip cap 11 in the condensation cylinder 9, a bowknot element 23 and distance elements 24, and a mounting hole 25 on the inner side. The drip cap 11 performs a protective role. Thanks to the drip cap 11 the catalyst 6 is not flooded with condensing water, which blocks active centers on its surface and makes the surface of the catalyst 6 no longer active until water evaporates. The drip cap 11 is mounted mechanically in the hole of the condensation cylinder 9 by rotating the drip cap 11 in such a way that the protruding bowknot element 23 is located over the crosswise shelves 16 of the condensation cylinder 9. For anchoring the drip cap 11 wedges 19 and elements 22, 26 and 29 are used thanks to which after the drip cap 11 gets fixed in the position it is not possible for it to spontaneously fall out of the hole of the condensation cylinder 9. For mounting the drip cap 11 in the condensation cylinder 9 there is a mounting hole 25, whose shape makes it possible to use the tools with fitting endings thanks to which it is possible to insert the drip cap 11 centrally into the hole of the condensation cylinder 9, and then it can be properly fixed. The drip cap 11 is provided with distance elements 24, whose role is to keep an appropriate distance of the walls of the condensation cylinder 9 and the catalytic core 5 from the drip cap 11. The distance elements 24 used increase the rigidity of the drip cap's 11 mounting in the condensation cylinder 9 and prevent tilting of the drip cap 11 to the sides while moving the cap according to the invention or storing it in a position different from the vertical one. An oval shape of the top and the concave bottom of the drip cap 11 makes it possible to avoid accumulation of condensate on the surface of the drip cap 11, and makes it possible for the condensate flowing down from the top surface of the drip cap 11 to get detached from the surface.

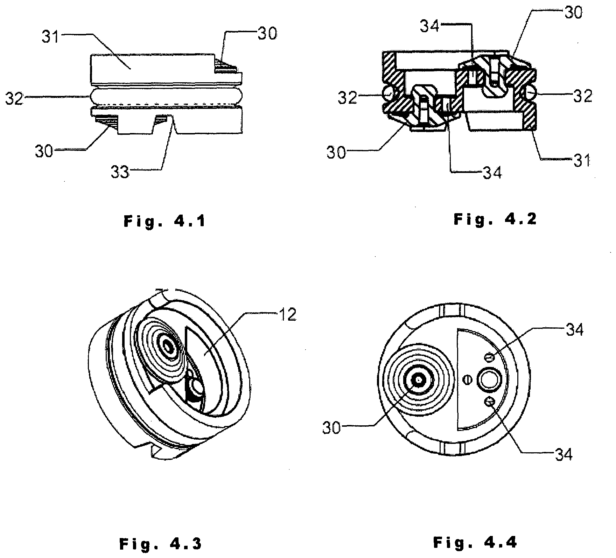

The two-way valve 12 shown in fig. 4.1, fig. 4.2, fig. 4.3 and fig. 4.4 is located over the drip cap 11 and is a modular combination of one-way valves: a positive pressure valve 30 and a negative pressure valve 30 located in the housing 31 provided with inlet openings 34 and grooves 33. In the solution according to the invention a VRLA valve was used as the two-way valve 12. The housing 31 of the two-way valve 12 is made of rigid acid-proof plastic material having an appropriate shape. In the housing 31 there is a groove in which an o-ring gasket 32 is placed. The two-way valve 12 is mounted in the condensation cylinder 9 by pressing and then fitting it into the hole by a properly chosen o-ring gasket 32, which seals the connection. Thanks to the grooves 33 on the housing 31 of the two-way valve 12 one knows in which direction the two-way valve 12 should be mounted in the condensation cylinder 9. The VRLA two-way valve 12 used in the gap according to the invention works in two directions making it possible to adjust positive and negative pressure in the operating system. A modular design of the two-way valve 12 makes it possible to adjust independent pressure values of the positive pressure valve 30 and the negative pressure valve 30. The positive pressure valve 30 opens at a pressure of 120 mbar ÷ 190 mbar, whereas the negative pressure valve 30 adjusts negative pressure at 50 mbar ÷ 100mbar. The positive pressure valve 30 and negative pressure valve 30 have an umbrella design and are made of an elastic gas-tight material resistant to acids and high temperature, which does not change its properties over time while working under 180°C. On the housing 31 of the two-way valve 12, under the positive pressure valve 30 and negative pressure valve 30 there are inlet openings 34 in each direction, which enable transport of gases thanks to which a possibility of clogging of the system during long-year operation of the cap according to the invention has been eliminated, and the cap's operational safety has been improved.

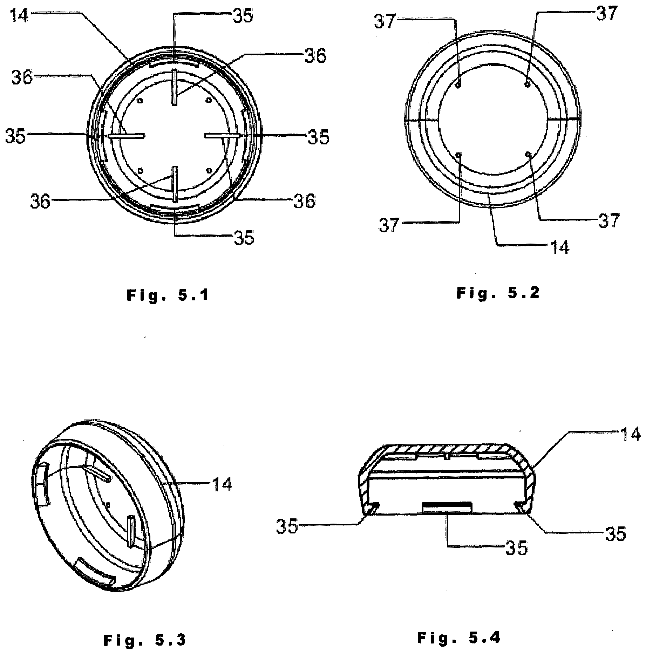

The top cap 14 shown in fig. 5.1, fig. 5.2, fig. 5.3 and fig. 5.4 is provided with inlet and outlet openings 34, clamps 35 for connection with the condensation cylinder 9 and crosswise ribs 36. The top cap 14 is permanently coupled with the condensation cylinder 9 by pressing the clamps 35 onto the crosswise rib 17 of the condensation cylinder 9, wherein the top cap 14 is mounted on the condensation cylinder 9 in such a way that it can be turned freely over the circumference of the rib 17 of the condensation cylinder 9 so that safe circulation of gases is possible without any clogging possibility. The crosswise ribs 36 of the top cap 14 adhere to an ignition safety device 13 pressing onto it in the throat 20 of the upper part of the condensation cylinder 9 and they form a free space between the inside surface of the top cap 14 and the top surface of the condensation cylinder 9 so that safety is ensured thanks to gas circulation. The inlet and outlet openings 37 are positioned in such a way that they prevent fouling of the ignition safety device 13 made of porous ceramics, which is placed under the top cap 14.

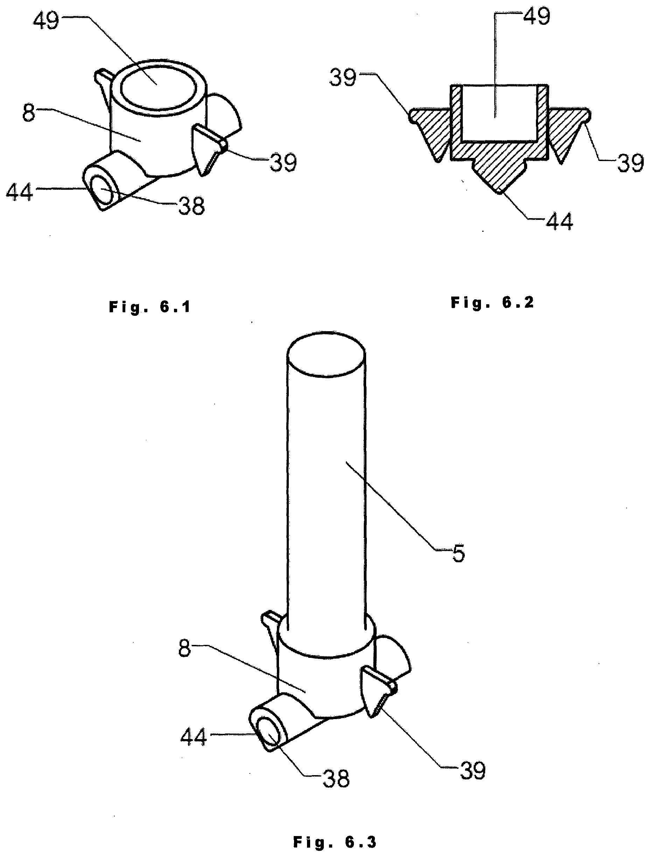

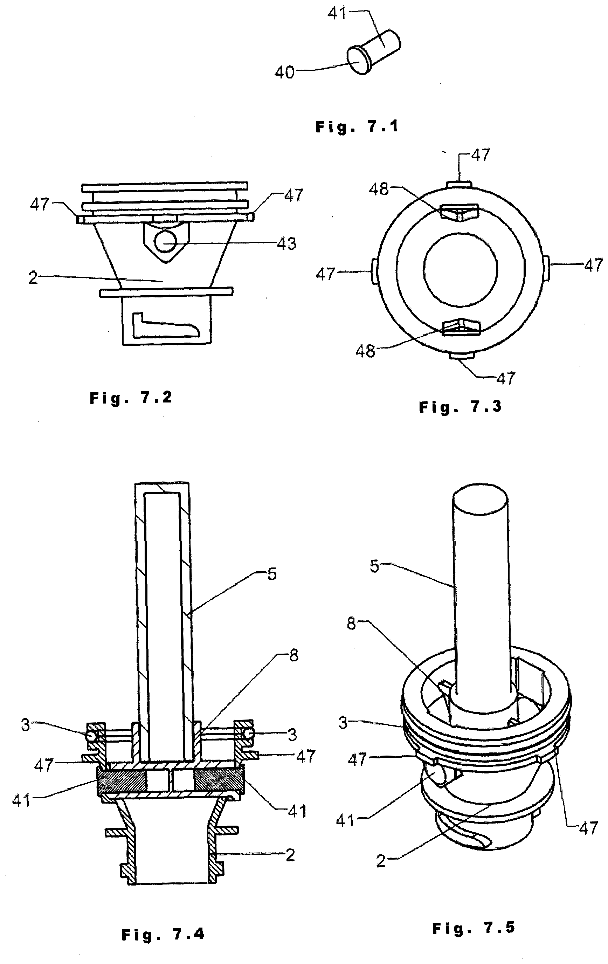

The flange 8 shown in fig. 6.1, fig. 6.2, fig. 6.3 has the the form of a sleeve 49, where the catalytic core 5 is placed. The flange 8 is part of the body 2 visible in fig. 7.2, fig. 7.3, fig. 7.4 and fig. 7.5. The flange 8 is mounted on the body 2 through a pin 41 with a head 40 pressed into the mounting hole 43 in the body 2 and into the mounting hole 38 in the flange 8 and through the distance ribs 39 in the flange 8 placed in the grooves 48 in the body 2. The shape of the distance ribs 39 and the shape of the bottom 44 of the flange 8 ensure fully stable fixation of the flange 8 in the body 2 and at the same time ensure a stable position of the catalytic core 5 during the operation of the cap according to the invention.

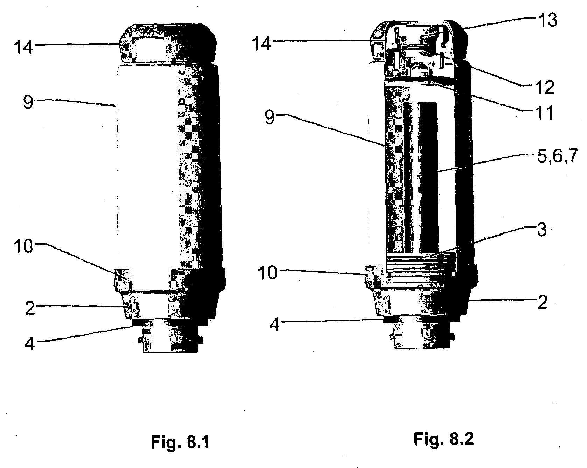

In a favorable embodiment of the invention, the gas recombination cap shown in fig. 8.1 and fig. 8.2 consists of a body 2 with a gasket 3, a ring 10, a condensation cylinder 9, a top cap 14, a gasket 4 for mounting the cap to a battery cover, a catalytic core 5 with a catalyst 6 and an adsorbent 7, a drip cap 11, a two-way valve 12, a safety ignition device 13. The entire structure of the cap forms a tight system which is installed on battery covers.

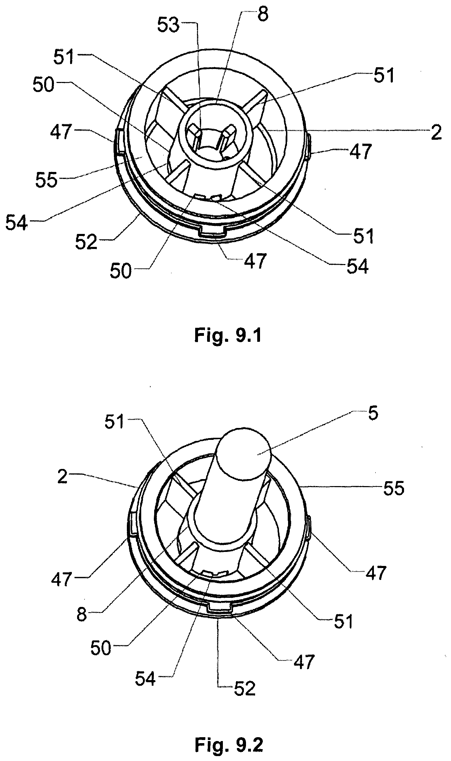

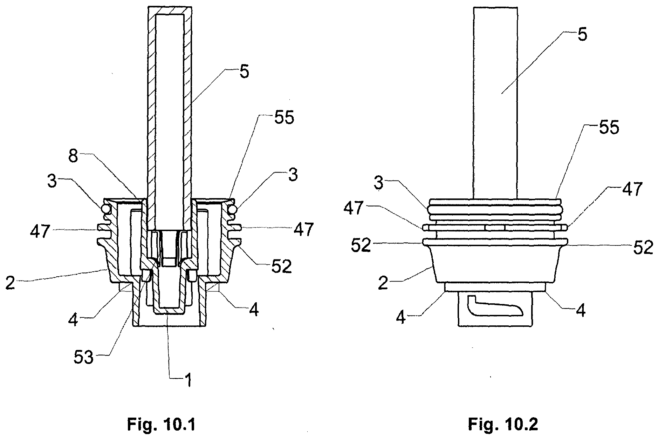

The body 2 of the cap according to the invention shown in fig. 9.1, fig. 9.2, fig. 10.1 and fig. 10.2 forms an integrated whole with a basket 1 and a flange 8. The basket 1 and the flange 8 form a compact monolithic element inside the body 2. The basket 1 and the flange 8 are coupled with the body 2 through connectors 51 placed symmetrically over the circumference, said connectors having the form of elongated distance ribs. The flange 8 is provided on its inner side with elongated distance ribs 53, which enable mounting in the flange 8 of the catalytic core 5 at an appropriate depth, and extraction of excess heat. The connectors 51 coupling the flange 8 and the basket 1 with the body 2, and the distance ribs 53 inside the flange 8 are aligned relative to each other. The flange 8, at its base, is provided with inlet and outlet gaps 50 placed symmetrically over the circumference of the side wall, said gaps having the purpose of gas transport and enabling the return of the condensate flowing back on the cap walls to the battery. The inlet and outlet gaps 50 have a rectangular shape with a narrowing 54 inside at the base of the flange 8. The upper wall 55 of the body 2 inclines inwards the body 2 to facilitate the flow down of condensate and prevent accumulation of condensate on the o-ring 3. On the outer side, the body 2 is provided with a cross-wise rib 52, which from the bottom hides the mounting elements of the condensation cylinder 9.

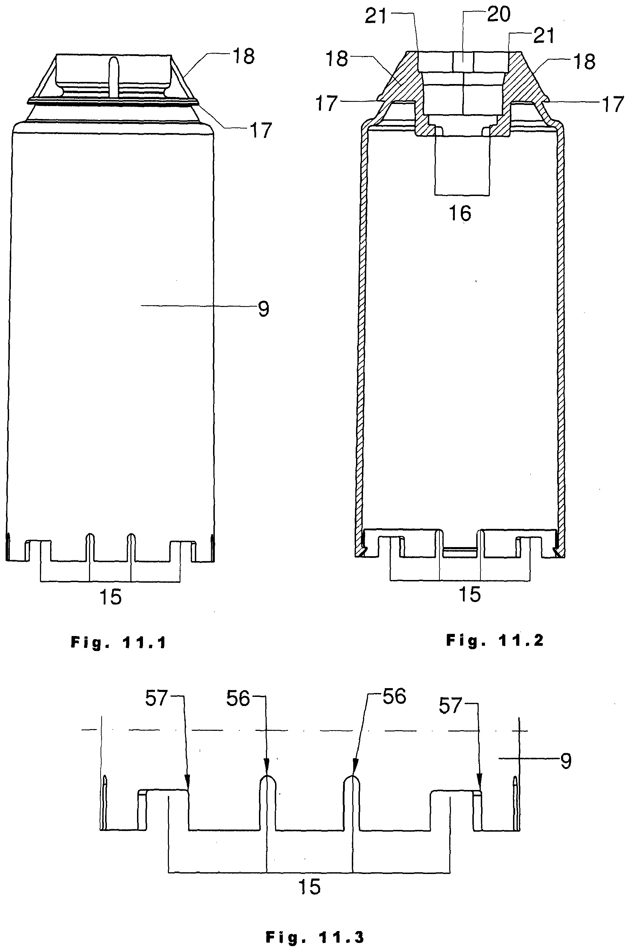

An embodiment of the invention shown in fig. 11.1, 11.2 and 11.2 shows a cylinder 9 of the cap according to the invention, which in its bottom part has a group of parallel notches 15 of different widths, wherein, inversely proportionate to the width of the notches 15, they are characterized by a respectively big curve 56 and a small curve 57.

## Claims

1. A gas recombination cap with a gas-tight housing which is provided with a recombination unit inside with a catalyst and an adsorbent, a positive pressure valve, a negative pressure valve and an ignition safety device, wherein the gas-tight housing comprises a basket (1), a body (2), a condensation cylinder (9) and a top cap (14), wherein the basket (1) has a tubular shape and is provided with openings (42), the body (2) has a conical shape, is located on the basket (1) and has a flange (8) inside, wherein the condensation cylinder (9) is located on the body (2), has the shape of a tube narrowing towards the top into a conical neck which on its outer side has a crosswise rib (17) of a circular shape, reinforced with vertical ribs (18), and on its inner side is in the bottom part provided with crosswise shelves (16) with wedges (19), narrowing to the top with beveling (21), closed with a throat (20), and inside is provided with a catalytic core (5), a drip cap (11), a two-way valve (12), the ignition safety device (13), where the catalytic core (5) has the shape of a ceramic pipe filled in with the catalyst (6) and the adsorbent (7), installed inside a sleeve (49) in the flange (8) located in the body (2), the drip cap (11) is located over the catalytic core (5), has the shape of a cover convex on the outside and concave on the inside, whereas the drip cap (11) is provided with elements (22), (26), (29) anchored on wedges (19) of the condensation cylinder (9) and a protruding bowknot element (23) located over crosswise shelves (16) of the condensation cylinder (9), and the two-way valve (12) is located over the drip cap (11) and is a modular combination of one-way valves, that is the positive pressure valve (30) and the negative pressure valve (30) located in the housing (31) provided with inlet openings (34), wherein the ignition safety device (13) made of porous ceramic material is tightly fixed between the top cap (14) and the two-way valve (12), in the throat (20) of the upper part of the condensation cylinder (9), and the top cap (14) is provided with inlet and outlet openings (37), clamps (35) for connection with the condensation cylinder (9) and crosswise distance ribs (36).

2. The gas recombination cap according to claim 1 **characterized in that** the condensation cylinder (9) is mounted on the body (2) through some notches (15) on the circumference of the bottom part of the condensation cylinder (9) and respective protruding ribs (47) on the circumference of the body (2).

3. The gas recombination cap according to claim 1 **characterized in that** the flange (8) is mounted into the body (2) through a pin (41) with a head (40) pressed into a mounting hole (43) in the body (2) and into a mounting hole (38) in the flange (8) and through distance ribs (39) in the flange (8) placed in respective grooves (48) located in the body (2).

4. The gas recombination cap according to claim 1 **characterized in that** the basket (1) and the flange (8) comprise a compact monolithic element placed inside the body (2), with which they are coupled into one integrated whole by connectors (51) placed symmetrically on the circumference, having the shape of elongated distance ribs, wherein the flange (8) is on its inner side provided with elongated distance ribs (53) distributed symmetrically on the circumference of the side wall, and at the base is provided with inlet and outlet gaps (50) distributed symmetrically on the circumference of the side wall.

5. The gas recombination cap according to claim 4 **characterized in that** connectors (51) and distance ribs (53) are aligned with respect to one another.

6. The gas recombination cap according to claim 4 **characterized in that** inlet and outlet gaps (50) have a rectangular shape with a narrowing (54) in the middle of the base of the flange (8).

7. The gas recombination cap according to claim 4 **characterized in that** the upper wall (55) of the body (2) is inclined inwards the body (2).

8. The gas recombination cap according to claim 4, **characterized in that** the body (2) on its outer side is provided with a crosswise rib (52).

9. The gas recombination cap according to claim 4, **characterized in that** the top cap (14) is permanently coupled with the condensation cylinder (9) through pressing of the clamps (35) onto the crosswise rib (17) in the neck of the condensation cylinder (9).

10. The gas recombination cap according to claim 1, or claim 9, **characterized in that** the top cap (14) is mounted on the condensation cylinder (9) in such a way that it can be freely turned along the circumference of the rib (17) in the neck of the condensation cylinder (9).

11. The gas recombination cap according to claim 1 or claim 4, **characterized in that** crosswise ribs (36) of the top cap (14) adhere to an ignition safety device (13) pressing it in the throat (20) of the upper part of the condensation cylinder (9) and they form a free space between the inner surface of the top cap (14) and the top surface of the condensation cylinder (9).

12. The gas recombination cap according to claim 1 or claim 4, **characterized in that** the condensation cylinder (9) has notches (15) with curved edges (56) and (57), with curve radius inversely proportionate to the gap width.

13. The gas recombination cap according to claim 1 or claim 4 **characterized in that** the drip cap (11) is provided with distance elements (24) on its outer side, and with a mounting hole (25) on its inner side.

14. The gas recombination cap according to claim 1 or claim 4 **characterized in that** there is a groove on the housing (31) of the two-way valve, where a gasket (32) is placed an o-ring with a corresponding inner and outer diameter.

15. The gas recombination cap according to claim 1 or claim 4, **characterized In that** the positive pressure valve (30) and the negative pressure valve (3) have an umbrella design.

16. A gas recombination cap according to claim 1 or claim 4 **characterized in that** the positive pressure (30) valve opens at a pressure of 12 kPa to 19 kPa (120 mbar - 190 mbar), whereas the negative pressure valve opens at a pressure of 5 kPa to 10 kPa (50 mbar - 100 mbar).

## Patentansprüche

1. Gasrekombinationskappe mit einem gasdichten Gehäuse, das mit einer Rekombinationseinheit mit integriertem Katalysator und einem Adsorptionsmittel, einem Überdruckventil, einem Unterdruckventil und einer Zündsicherung versehen ist, wobei das gasdichte Gehäuse einen Korb (1), einen Körper (2), einen Kondensationszylinder (9) und eine obere Kappe (14) aufweist, wobei der Korb (1) rohrförmig ausgebildet und mit Öffnungen (42) versehen ist, wobei der Körper (2) konischförmig ausgebildet ist, am Korb (1) positioniert ist und einen inneren Flansch (8) aufweist, wobei der Kondensationszylinder (9) am Körper (2) angeordnet ist und die Form eines nach oben hin verjüngenden und zu einem konischen Hals übergehenden Rohres aufweist, wobei der Hals an seiner Außenseite eine kreisförmige, mit senkrechten Rippen (18) verstärkte, kreisförmige Rippe (17) aufweist und an seiner Innenseite im unteren Teil mit Querböden (16) mit Keilen (19) versehen ist, die sich nach oben verengen und mit einer Kehle (20) verschlossen ist und innen mit einem katalytischen Kern (5), einer Tropfkappe (11), einem 2-Wegeventil (12), einer Zündsicherung (13) versehen ist, wobei der katalytische Kern (5) die Form eines mit dem Katalysator (6) und dem Adsorptionsmittel (7) gefüllten Keramikrohres aufweist, und im Inneren eine Hülse (49) im Flansch (8) installiert ist, die sich im Körper (2) befindet, die Tropfkappe (11) ist über dem katalytischen Kern (5) angeordnet, die die Form einer nach außen konvexen und innen konkaven Abdeckung aufweist, wobei die Tropfkappe (11) mit an Keilen (19) des Kondensationszylinders (9) verankerten Elementen (22), (26), (29) versehen ist und einem über kreuzförmige Fachböden (16) des Kondensationszylinders (9) angeordneten, vorspringenden Bowknot-Element (23) und das 2-Wegeventil (12) über der Tropfkappe (11) angeordnet ist und eine modulare Kombination von Einwegventilen ist, das heißt dem Überdruckventil (30) und dem Unterdruckventil (30), die in der mit den Einlassöffnungen (34) versehenen Gehäuse (31) angeordnet sind, wobei die Zündsicherung (13), die aus porösem Keramikmaterial gefertigt ist, zwischen der oberen Kappe (14) und dem Zweiwegeventil (12) fest verbunden ist, in der Kehle (20) des oberen Teils des Kondensationszylinders (9) angeordnet ist und die obere Kappe (14) mit Einlass- und Auslassöffnungen (37), Klemmen (35) zur Verbindung mit dem Kondensationszylinder (9) und kreuzförmigen Abstandsrippen (36) versehen ist.

2. Gasrekombinationskappe nach Anspruch 1 **dadurch gekennzeichnet, dass** der Kondensationszylinder (9) am Körper (2) mit einigen Kerben (15) am Umfang des Unterteiles des Kondensationszylinders (9) und jeweilige vorstehende Rippen (47) am Umfang des Körpers (2) angebracht ist.

3. Gasrekombinationskappe nach Anspruch 1 **dadurch gekennzeichnet, dass** der Flansch (8) in dem Körper (2) durch einen Zapfen (41) mit einem Kopf (40), der in eine Befestigungsbohrung (43) in den Körper (2)und in eine Befestigungsbohrung (38) in dem Flansch (8) eingepresst ist und durch sich in dem Körper (2) befindliche Abstandsrippen (39) in dem Flansch (8), die in jeweiligen Rillen in dem Körper (2) angebracht sind.

4. Gasrekombinationskappe nach Anspruch 1 **dadurch gekennzeichnet, dass** der Korb (1) und der Flansch (8) ein kompaktes monolithisches Element umfassen, das innerhalb des Körpers (2) angeordnet ist, mit dem sie durch Verbinder (51) in eine integrierte Einheit symmetrisch am Umfang eingekoppelt werden mit, der die Form von länglichen Abstandsrippen aufweist, wobei der Flansch (8) an seiner Innenseite mit längs verteilten Abstandsrippen (53) versehen ist, die symmetrisch am Umfang der Seitenwand verteilt sind und an dem Boden mit Einlass- und Auslassspalten (50) versehen ist, die symmetrisch am Umfang der Seitenwand verteilt sind.

5. Gasrekombinationskappe nach Anspruch 4 **dadurch gekennzeichnet, dass** die Verbinder (51) und die Abstandsrippen (53) zueinander ausgerichtet sind.

6. Gasrekombinationskappe nach Anspruch 4 **dadurch gekennzeichnet, dass** die Einlass- und Auslassspalten (50) eine rechteckige Form mit einer Verengung (54) mittig im Bodens des Flansches (8) aufweisen.

7. Gasrekombinationskappe nach Anspruch 4 **dadurch gekennzeichnet, dass** die obere Wand (55) des Körpers (2) nach innen geneigt ist.

8. **8.** Gasrekombinationskappe nach Anspruch 4 **dadurch gekennzeichnet, dass** der Körper (2) an seiner Außenseite mit einer kreuzförmigen Rippe (52) versehen ist.

9. Gasrekombinationskappe nach Anspruch 4 **dadurch gekennzeichnet, dass** die obere Kappe (14) durch Drücken der Klemmen (35) mit dem Kondensationszylinder (9) fest auf der kreuzförmigen Rippe (17) im Hals des Kondensationszylinders (9) gekoppelt ist.

10. Gasrekombinationskappe nach Anspruch 1 oder Anspruch 9 **dadurch gekennzeichnet, dass** die obere Kappe (14) am Kondensationszylinder (9) so montiert ist, dass sie frei am Umfangs der Rippe (17) im Hals des Kondensationszylinder (9) gedreht werden kann.

11. Gasrekombinationskappe nach Anspruch 1 oder Anspruch 4, **dadurch gekennzeichnet, dass** die kreuzförmige Rippen (36) der oberen Kappe (14) an einer Zündsicherung (13) anhaften und die in die Kehle (20) des oberen Teils des Kondensationszylinders (9) drücken und die einen Freiraum zwischen der Innenfläche der oberen Kappe (14) und der Oberseite des Kondensationszylinders (9) bilden.

12. Gasrekombinationskappe nach Anspruch 1 oder Anspruch 4, **dadurch gekennzeichnet, dass** der Kondensationszylinder (9) Kerben (15) mit gebogenen Ecken (56) und (57) aufweist, wobei der Kurvenradius umgekehrt proportional zur Spaltbreite ist.

13. Gasrekombinationskappe nach Anspruch 1 oder Anspruch 4 **dadurch gekennzeichnet, dass** die Tropfkappe (11) an ihrer Außenseite mit Distanzelementen (24) versehen ist und an ihrer Innenseite eine Befestigungsöffnung (25) aufweist.

14. Gasrekombinationskappe nach Anspruch 1 oder Anspruch 4 **dadurch gekennzeichnet, dass** am Gehäuse (31) des 2-Wegewentils **eine** Kerbe angeordnet ist, wo eine Dichtung (32) mit einem O-Ring mit einer entsprechenden Innen- und Außendurchmesser angeordnet ist.

15. Gasrekombinationskappe nach Anspruch 1 oder Anspruch 4 **dadurch gekennzeichnet, dass** das Überdruckventil (30) und das Unterdruckventil (3) eine schirmförmige Ausführung aufweisen.

16. Gasrekombinationskappe nach Anspruch 1 oder Anspruch 4 **dadurch gekennzeichnet, dass** das Überdruckventil (30) bei einem Druck von 12 kPa bis 19 kPa (120 mbar - 190 mbar) und das Unterdruckventil bei einem Druck von 5 kPa bis 10 kPa (50 mbar -100 mbar) öffnet.

## Revendications

1. Coiffe de recombinaison de gaz avec un boîtier étanche aux gaz qui est muni d'une unité de recombinaison à l'intérieur, avec un catalyseur et un adsorbant, une valve à pression positive, une valve à pression négative et un dispositif de sécurité d'allumage, dans laquelle le boîtier étanche aux gaz comprend un panier (1), un corps (2), un cylindre de condensation (9) et une coiffe supérieure (14) dans laquelle le panier (1) a une forme tubulaire et est muni des ouvertures (42), le corps (2) a une forme conique, est localisé sur le panier (1) et a une bride (8) à l'intérieur, dans laquelle le cylindre de condensation (9) est localisé sur le corps (2), a une forme d'un tube, qui se rétrécit vers le haut dans un col conique qui a sur sa face extérieure une nervure transversale (17) ayant une forme circulaire, reinforcée par des nervures verticales (18), et sur sa face intérieure, dans la partie inférieure, est munie des étagères transversales (16) avec des cales (19), se rétrécissant vers le haut avec biseautage (21), fermé avec un goulot (20), et à l'intérieur est munie d'un noyau catalytique (5), un larmier (11), une valve à deux voies (12), le dispositif de sécurité d'allumage (13), dans lequel le noyau catalytique (5) a la forme d'un tube céramique rempli avec le catalyseur (6) et l'adsorbant (7), installé dans un manchon (49) dans la bride (8) localisée dans le corps (2), le larmier (11) est localisé au-dessus du noyau catalytique (5), a la forme d'un courvecle convexe à l'extérieur et concave à l'intérieur, pendant que le larmier (11) est muni des éléments (22), (26), (29) ancrés sur les cales (19) du cylindre de condensation (9) et un élément « bowknot » en saillie (23) localisé au-dessus d'étagères transversales (16) sur le cylindre de condensation (9) et la valve à deux voies (12) est localisée au-dessus du larmier (11) et est une combinaison modulaire des valves à une voie c'est-à-dire la valve à pression positive (30) et la valve à pression negative (30) localisés dans le boîtier (31) muni des ouvertures d'entrée (34) dans lequel le dispositif de sécurité d'allumage (13) fait d'un matériau céramique poreux est fixé de façon étanche entre la coiffe supérieure (14) et la valve à deux voies (12), dans le goulot (20) de la partie supérieure du cylindre de condensation (9), et la coiffe supérieure (14) et munie des ouvertures d'entrée et de sortie (37), de pinces (35) pour le raccordement avec le cylindre de condensation (9) et de nervures d'écartement transversales (36).

2. Coiffe de recombinaison de gaz selon la revendication 1, **caractérisée en ce que** le cylindre de condensation (9) est monté sur le corps (2) par quelques encoches (15) sur la circonférence de la partie inférieure du cylindre de condensation (9) et des nervures (47) en saillie respectifs sur la circonférence du corps (2).

3. Coiffe de recombinaison de gaz selon la revendication 1, **caractérisée en ce que** la bride (8) est montée dans le corps (2) par une broche (41) avec une tête (40) enfoncée dans un trou de montage (43) dans le corps (2) et dans un trou de montage (38) dans la bride (8) et par les nervures d'écartement (39) dans la bride (8) placées dans les rainures respectives (48) localisées dans le corps (2).

4. Coiffe de recombinaison de gaz selon la revendication 1, **caractérisée en ce que** le panier (1) et la bride (8) comprennent un élément compact monolithe placé à l'intérieur du corps (2), avec lequel ils sont couplés en un ensemble par des connecteurs (51) placés de manière symétrique sur la circonférence ayant la forme de nervures d'écartement allongées, dans laquelle la bride (8) est munie sur sa face intérieure des nervures d'écartement allongées (53) répartis symétriquement sur la circonférence de la paroi latérale, et à la base est munie des intervalles d'entrée et de sortie (50) répartis symétriquement sur la circonférence de la paroi latérale.

5. Coiffe de recombinaison de gaz selon la revendication 4, **caractérisée en ce que** les connecteurs (51) et les nervures d'écartement (53) sont alignés l'une par rapport à l'autre.

6. Coiffe de recombinaison de gaz selon la revendication 4, **caractérisée en ce que** les intervalles d'entrée et de sortie (50) ont une forme recangulaire avec un rétrécissement (54) au milieu de la base de la bride (8).

7. Coiffe de recombinaison de gaz selon la revendication 4, **caractérisée en ce que** la paroi supérieure (55) du corps (2) est inclinée vers l'intérieur du corps (2).

8. Coiffe de recombinaison de gaz selon la revendication 4, **caractérisée en ce que** le corps (2) sur sa face extérieure est muni d'une nervure transversale (52).

9. Coiffe de recombinaison de gaz selon la revendication 4, **caractérisée en ce que** la coiffe supérieure (14) est couplée en permanence avec le cylindre de condensation (9) par pression des pinces (35) sur la nervure transversale (17) dans le col du cylindre de condensation (9).

10. Coiffe de recombinaison de gaz selon la revendication 1 ou la revendication 9, **caractérisée en ce que** la coiffe supérieure (14) est montée sur le cylindre de condensation (9) de telle sorte, qu'elle peut être tournée librement le long de la circonférence de la nervure (17) dans le col du cylindre de condensation (9).

11. Coiffe de recombinaison de gaz selon la revendication 1 ou la revendication 4, **caractérisée en ce que** les nervures transversales (36) de la coiffe supérieure (14) adhèrent à un dispositif de sécurité d'allumage (13) en le pressant dans le goulot (20) de la partie supérieure du cylindre de condensation (9) et ils forment un espace libre entre la surface interne et la coiffe supérieure (14) et la surface supérieure du cylindre de condensation (9).

12. Coiffe de recombinaison de gaz selon la revendication 1 ou la revendication 4, **caractérisée en ce que** le cylindre de condensation (9) a les encoches (15) avec des bordes arrondis (56) et (57), avec un rayon de courbe inversement proportionnel à la largeur de l'intervalle.

13. Coiffe de recombinaison de gaz selon la revendication 1 ou la revendication 4, **caractérisée en ce que** le larmier (11) et muni des éléments d'écartement (24) sur sa face extérieure, et du trou de montage (25) sur sa face intérieure.

14. Coiffe de recombinaison de gaz selon la revendication 1 ou la revendication 4, **caractérisée en ce qu'**il est le rainure sur le boîtier (31) de la valve à deux voies, dans lequel le joint (32) est placé sur le joint torique ayant un diamètre intérieur et extérieur correspondants.

15. Coiffe de recombinaison de gaz selon la revendication 1 ou la revendication 4, **caractérisée en ce que** la valve à pression positive (30) et la valve à pression négative (3) ont une conception de parapluie.

16. Coiffe de recombinaison de gaz selon la revendication 1 ou la revendication 4, **caractérisée en ce que** la valve à pression positive (30) s'ouvre à une pression de 12 kPa à 19 kPa (120 mbar - 190 mbar), pendant que la valve à pression négative s'ouvre à une pression de 5 kPa à 10 kPa (50 mbar- 100 mbar).
